# EUROPEAN PATENT APPLICATION

(11) **EP 4 696 433 A2**
(43) Date of publication of application: **18.02.2026**
(21) Application number: 25195455.8
(22) Date of filing: 12.08.2025
(51) Int. Cl.: B22F 10/28, B22F 10/362, B22F 10/85, B22F 12/13, B33Y 10/00, B33Y 30/00, B33Y 50/02

(54) **THREE-DIMENSIONAL POWDER BED FUSION ADDITIVE MANUFACTURING APPARATUS AND CONTROL METHOD OF THREE-DIMENSIONAL POWDER BED FUSION ADDITIVE MANUFACTURING APPARATUS**

(30) Priority: 15.08.2024 JP 2024135551
(71) Applicant: Jeol Ltd., Akishima, Tokyo 196-8558 (JP)
(72) Inventor: IIDA, Masahiko, Tokyo, 196-8558 (JP); KAWAKAMI, Masahiko, Tokyo, 196-8558 (JP)
(74) Representative: Boult Wade Tennant LLP

(57) **Abstract**

The three-dimensional powder bed fusion additive manufacturing apparatus (1) includes a build plate (22), a powder supply device (16), a beam irradiation device (2), and a control unit. The control unit controls the irradiation device. In addition, as a predetermined timing is reached when the powder material (32) is melted, the irradiation device is controlled, a melting process of the powder material (32) is interrupted, and a preheating process in which the powder material (32) is preheated is performed.

## Description

### BACKGROUND

### Technical Field

The present invention relates to a three-dimensional powder bed fusion additive manufacturing (PBF-AM) apparatus and a control method of the three-dimensional PBF-AM apparatus that builds layers on one another one by one, the layers being each obtained by thinly spreading a powder material on a stage.

### Related Art

In recent years, three-dimensional PBF-AM technologies of building layers on one another one by one have been in the limelight, the layers being each obtained by thinly spreading a powder material, and many types of three-dimensional PBF-AM technologies have been developed depending on differences between materials of the powder material and building techniques.

As a building method of a three-dimensional PBF-AM apparatus in the related art, for example, a powder material is spread for each layer on a base plate installed on an upper surface of a stage. Next, with respect to the powder material spread on the base plate, only a two-dimensional structure corresponding to one cross section of a built object is melted by a heating mechanism including an electron beam or a laser. Then, such layers of the powder material are stacked one by one in a height direction (a Z direction), thereby forming a built object (see, for example, Patent Literature 1).

In addition, Patent Literature 1 describes a technology including a build plate, a powder application device that applies metal powder onto the build plate to form a powder layer, a beam irradiation device that irradiates the powder layer with electron beams, and a control unit that controls the powder application device and the beam irradiation device. In a case where the powder layer is preheated by irradiation with the electron beams, the control unit sets a beam size and an irradiation position of each of the electron beams so that lines of the electron beams do not coincide at least at the start of preheating, and controls the beam irradiation device to gradually increase at least one of a beam current and a beam size of each of the electron beams from the start of preheating to the end of preheating.

### Citation List

### Patent Literature

Patent Literature 1: JP 2023-13543 A

### SUMMARY

However, in the technology described in Patent Literature 1, a preheating process of preheating the powder material before melting the powder material is not performed until a melting process of the entire powder material in one layer in the built object is completed. As a result, in the case of a built object having a relatively large build area, a temperature of the powder material decreases from the start to the end of the melting process, and variations in the temperature during performing melting in a built surface occur.

In addition, when a plurality of built objects are built, the melting process of the powder material constituting one built object is completed, and then a powder material of another built object is preheated. Also in this case, in a case where built surfaces of the plurality of built objects have different sizes from each other, a temperature during performing melting varies between a built object having a large built surface and a built object having a small built surface.

In view of the above problems, an object of the present invention is to provide a three-dimensional PBF-AM apparatus and a control method of the three-dimensional PBF-AM apparatus capable of reducing variations in a temperature at the time of melting a powder material.

In order to solve the above problems and achieve the object of the present invention, a three-dimensional PBF-AM apparatus of the present invention is a three-dimensional PBF-AM apparatus that builds a built object. The three-dimensional PBF-AM apparatus includes a build plate, a powder supply device, an irradiation device, and a control unit. The powder supply device supplies a powder material to the build plate and forms a powder layer. The irradiation device irradiates the powder layer with primary beams. The control unit controls the irradiation device. As a predetermined timing is reached when the powder material is melted, the control unit controls the irradiation device to interrupt a melting process of the powder material and perform a preheating process in which the powder material is preheated.

In addition, a control method of a three-dimensional PBF-AM apparatus of the present invention is a control method used for the three-dimensional PBF-AM apparatus having the above-described configuration and includes the following processes (1) and (2).
(1) A process of supplying a powder material.
(2) A process of irradiating the powder material with a primary beam and melting the powder material.

As a predetermined timing is reached when the powder material is melted, a melting process of the powder material is interrupted, and a preheating process in which the powder material is preheated is performed.

According to the three-dimensional PBF-AM apparatus and the control method of the three-dimensional PBF-AM apparatus of the present invention, it is possible to reduce variations in a temperature at the time of melting the powder material.

### BRIEF DESCRIPTION OF DRAWINGS

FIG. 1 is a schematic cross-sectional view schematically showing a three-dimensional PBF-AM apparatus according to an embodiment of the present invention;
FIG. 2 is a block diagram showing a configuration example of a control system of the three-dimensional PBF-AM apparatus according to the embodiment of the present invention;
FIG. 3 is a flowchart showing an example of build operation of the three-dimensional PBF-AM apparatus according to the embodiment of the present invention;
FIGS. 4A to 4C are illustrative views showing a first operation example (entire surface heating) of preheating operation during a sintering step in the build operation of the three-dimensional PBF-AM apparatus according to the embodiment of the present invention;
FIG. 5 is a flowchart showing the sintering step in the build operation of the three-dimensional PBF-AM apparatus according to the embodiment of the present invention;
FIG. 6 is an illustrative view showing a first operation example of the sintering step;
FIG. 7 is an illustrative view showing the first operation example of the sintering step;
FIG. 8 is an illustrative view showing the first operation example of the sintering step;
FIG. 9 is an illustrative view showing the first operation example of the sintering step;
FIG. 10 is an illustrative view showing the first operation example of the sintering step;
FIG. 11 is an illustrative view showing the first operation example of the sintering step;
FIG. 12 is an illustrative view showing the first operation example of the sintering step;
FIG. 13 is an illustrative view showing the first operation example of the sintering step;
FIG. 14 is an illustrative view showing the first operation example of the sintering step;
FIG. 15 is an illustrative view showing the first operation example of the sintering step;
FIG. 16 is an illustrative view showing the first operation example of the sintering step;
FIG. 17 is an illustrative view showing the first operation example of the sintering step;
FIG. 18 is an illustrative view showing the first operation example of the sintering step;
FIG. 19 is an illustrative view showing the first operation example of the sintering step;
FIG. 20 is an illustrative view showing the first operation example of the sintering step;
FIG. 21 is an illustrative view showing the first operation example of the sintering step;
FIG. 22 is an illustrative view showing the first operation example of the sintering step;
FIG. 23 is an illustrative view showing the first operation example of the sintering step;
FIGS. 24A to 24C are illustrative views showing a second operation example (local heating) of the preheating operation during the sintering step in an operation procedure of the three-dimensional PBF-AM apparatus according to the embodiment of the present invention;
FIG. 25 is an illustrative view showing a second operation example of the sintering step;
FIG. 26 is an illustrative view showing the second operation example of the sintering step;
FIG. 27 is an illustrative view showing the second operation example of the sintering step;
FIG. 28 is an illustrative view showing the second operation example of the sintering step;
FIG. 29 is an illustrative view showing the second operation example of the sintering step;
FIG. 30 is an illustrative view showing the second operation example of the sintering step;
FIG. 31 is an illustrative view showing the second operation example of the sintering step;
FIG. 32 is an illustrative view showing the second operation example of the sintering step;
FIG. 33 is an illustrative view showing the second operation example of the sintering step; and
FIG. 34 is an illustrative view showing the second operation example of the sintering step.

### DETAILED DESCRIPTION

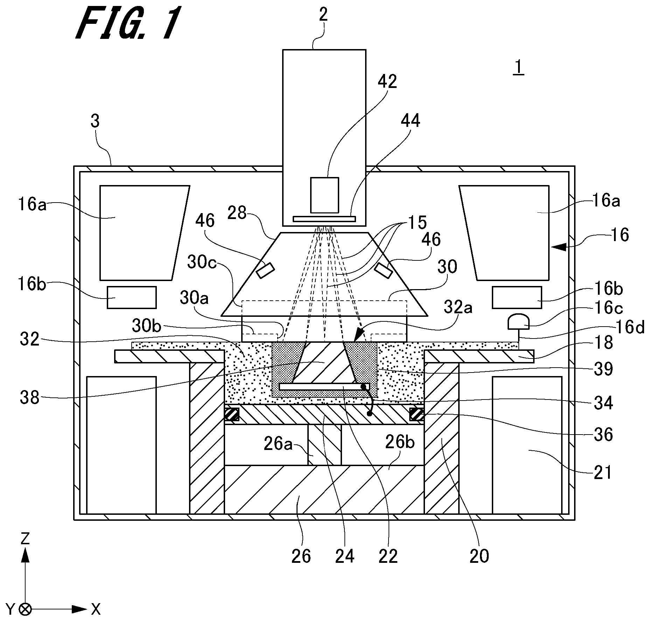

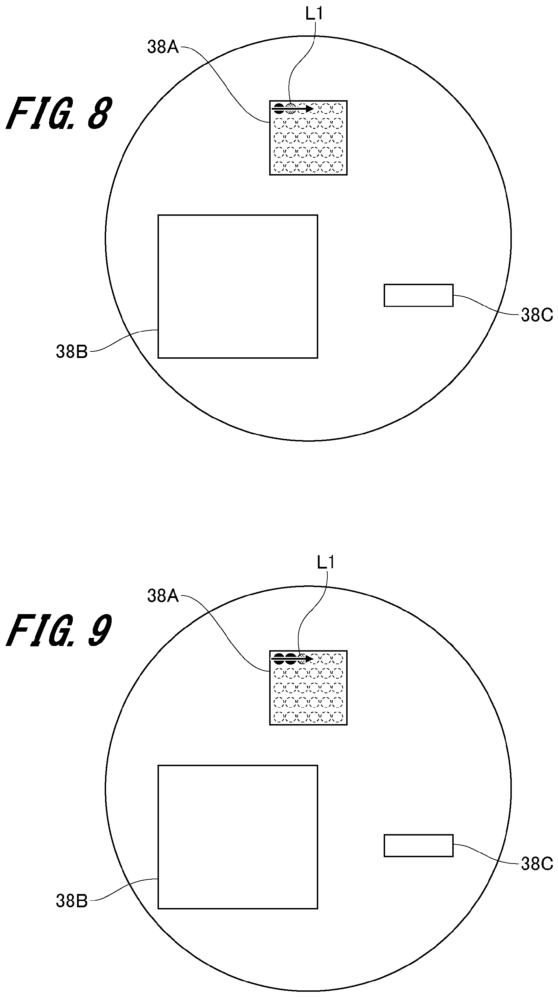

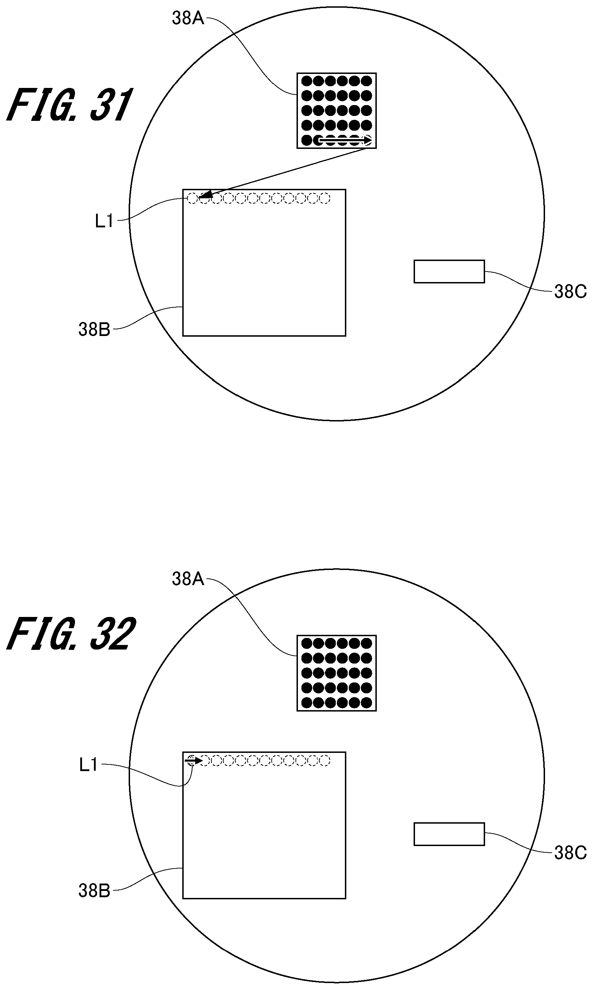

Hereinafter, embodiments of a three-dimensional PBF-AM apparatus and a control method of the three-dimensional PBF-AM apparatus of the present invention will be described with reference to FIGS. 1 to 34. Note that, in the drawings, the same members are denoted by the same reference numerals.

### 1. Embodiments

### 1-1. Configuration of Three-Dimensional PBF-AM Apparatus

First, an embodiment of the three-dimensional PBF-AM apparatus according to an embodiment (hereinafter, referred to as a "present example") of the present invention will be described with reference to FIG. 1.

FIG. 1 is a schematic cross-sectional view schematically showing the three-dimensional PBF-AM apparatus of the present example. In the following description, in order to clarify a shape, a positional relationship, or the like of each portion of the three-dimensional PBF-AM apparatus, a crosswise direction in FIG. 1 is referred to as an X direction, a depth direction in FIG. 1 is referred to as a Y direction, and an up-down direction in FIG. 1 is referred to as a Z direction. The X direction, the Y direction, and the Z direction are directions orthogonal to each other. In addition, the X direction and the Y direction are parallel to a horizontal direction, and the Z direction is parallel to a vertical direction.

A three-dimensional PBF-AM apparatus 1 shown in FIG. 1 is an apparatus that irradiates a powder material including metal powder of titanium, aluminum, iron, or the like with an electron beam to melt the powder material and stacks layers in which the powder material is solidified to build a three-dimensional object.

As shown in FIG. 1, the three-dimensional PBF-AM apparatus 1 includes a vacuum chamber 3, a beam irradiation device 2, a powder supply device 16, a build table 18, a build box 20, and a collection box 21. In addition, the three-dimensional PBF-AM apparatus 1 includes a build plate 22, an inner base 24, a plate moving device 26, a radiation shield cover 28, an electron shield 30, a camera 42, and a shutter 44. Further, the three-dimensional PBF-AM apparatus 1 includes a plurality of detection units 46 that detect backscattered electrons which are an example of electrons.

The vacuum chamber 3 is a chamber for setting a vacuum state by evacuating air in the chamber by a vacuum pump (not shown).

The beam irradiation device 2 is a device that irradiates the build plate 22 or a built surface 32a of a powder layer made of a powder material 32 with an electron beam 15. The built surface 32a corresponds to an upper surface of the powder layer. A state of the powder layer changes as steps of three-dimensional PBF-AM proceed. Although not shown, the beam irradiation device 2 includes an electron gun that is a generation source of the electron beam 15, a focusing lens that focuses the electron beam generated by the electron gun, and a deflection lens that deflects the electron beam 15 focused by the focusing lens. The focusing lens is configured using a focusing coil and focuses the electron beam 15 with a magnetic field generated by the focusing coil. The deflection lens is configured using a deflection coil and deflects the electron beam 15 with a magnetic field generated by the deflection coil.

The powder supply device 16 is a device that supplies, as an example of the powder material which becomes a raw material of a built object 38, the powder material 32 onto the build plate 22 to form the powder layer. The powder supply device 16 includes a hopper 16a, a powder dropping unit 16b, and a recoater 16c. The hopper 16a is a container for storing the metal powder. The powder dropping unit 16b is a machine that drops the powder material 32 stored in the hopper 16a onto the build table 18. The recoater 16c is an elongated member that extends in the Y direction and includes a blade 16d for spreading powder. The recoater 16c spreads, on the build table 18, the powder material 32 dropped by the powder dropping unit 16b. The recoater 16c is provided to be movable in the X direction in order to spread the powder material 32 over an entire surface of the build table 18.

The build table 18 is horizontally disposed inside the vacuum chamber 3. The build table 18 is disposed below the powder supply device 16. A central portion of the build table 18 is open. An opening shape of the build table 18 is circular in plan view or polygonal in plan view (for example, quadrangular in plan view).

The build box 20 is a box that forms a building space. An upper end portion of the build box 20 is connected to an opening edge of the build table 18. A lower end portion of the build box 20 is connected to a bottom wall of the vacuum chamber 3.

The collection box 21 is a box that collects the powder material 32 supplied more than necessary, of the powder material 32 supplied onto the build table 18 by the powder supply device 16.

The build plate 22 is a plate for forming the built objects (parts) 38 using the powder material 32. The built object 38 is formed by being layered on the build plate 22. The build plate 22 is formed in a circular shape in plan view or a polygonal shape in plan view to match the opening shape of the build table 18. The build plate 22 is connected (grounded) to the inner base 24 by a ground wire 34 so as not to enter an electrically floating state. The inner base 24 is maintained at a ground (GND) potential. The powder material 32 is spread over the build plate 22 and the inner base 24.

The inner base 24 is provided to be movable in the up-down direction (the Z direction). The build plate 22 moves in the up-down direction integrally with the inner base 24. The inner base 24 has a larger outer size than the build plate 22. The inner base 24 slides in the up-down direction along an inner surface of the build box 20. A seal member 36 is mounted on an outer circumferential portion of the inner base 24. The seal member 36 is a member that maintains slidability and sealability between the outer circumferential portion of the inner base 24 and the inner surface of the build box 20. The seal member 36 is made of a material having heat resistance and elasticity.

The plate moving device 26 is a device that moves the build plate 22 and the inner base 24 in the up-down direction. The plate moving device 26 includes a shaft 26a and a drive mechanism unit 26b. The shaft 26a is connected to an undersurface of the inner base 24. The drive mechanism unit 26b includes a motor and a power transmission mechanism (both not shown) and drives the power transmission mechanism using the motor as a drive source, thereby moving the build plate 22 and the inner base 24 integrally with the shaft 26a in the up-down direction. The power transmission mechanism includes, for example, a rack and pinion mechanism, a ball screw mechanism, or the like.

The radiation shield cover 28 is disposed between the build plate 22 and the beam irradiation device 2 in the Z direction. The radiation shield cover 28 is made of a metal such as stainless steel. The radiation shield cover 28 shields radiation heat generated when the powder material 32 is irradiated with the electron beam 15 by the beam irradiation device 2. When the powder material 32 is irradiated with the electron beam 15 in order to sinter the powder material 32, the powder material 32 is melted. At this time, when heat radiated from the built surface 32a of the powder layer, that is, radiation heat, is widely diffused in the vacuum chamber 3, thermal efficiency deteriorates. On the other hand, in a case where the radiation shield cover 28 is disposed above the build plate 22, the heat radiated from the built surface 32a is shielded by the radiation shield cover 28, and the shielded heat is reflected by the radiation shield cover 28 and returned to the build plate 22 side. Therefore, the heat generated by the irradiation with the electron beam 15 can be efficiently used.

In addition, the radiation shield cover 28 fulfills a function of reducing adhesion (vapor deposition) of an evaporated substance generated when the powder material 32 is irradiated with the electron beam 15 to an inner wall of the vacuum chamber 3. When the powder material 32 is irradiated with the electron beam 15, a part of the melted metal becomes an atomized evaporated substance and rises from the built surface 32a. The radiation shield cover 28 is disposed to cover a space above the built surface 32a so that this evaporated substance is not diffused in the vacuum chamber 3.

The electron shield 30 has an opening portion 30a and a shield portion 30b. In forming the built object 38, the electron shield 30 is disposed to cover an upper surface of the powder material 32, that is, the built surface 32a. At this time, the opening portion 30a exposes the powder material 32 spread on the build plate 22, and the shield portion 30b shields the powder material 32 positioned outside the opening portion 30a. A shape of the opening portion 30a is set to conform to a shape of the build plate 22. For example, if the build plate 22 is circular in plan view, the shape of the opening portion 30a in plan view is set to be circular accordingly, and if the build plate 22 is polygonal in plan view, the shape of the opening portion 30a in plan view is set to be polygonal accordingly.

The electron shield 30 is disposed below the radiation shield cover 28. The opening portion 30a and the shield portion 30b of the electron shield 30 are arranged between the build plate 22 and the radiation shield cover 28 in the Z direction. The electron shield 30 has a surrounding portion 30c. The surrounding portion 30c is disposed to surround an upper space above the opening portion 30a. A part (an upper portion) of the surrounding portion 30c overlaps the radiation shield cover 28 in the Z direction. The surrounding portion 30c fulfills a function of shielding radiation heat generated from the built surface 32a and a function of reducing diffusion of the evaporated material generated from the built surface 32a. That is, the surrounding portion 30c fulfills the same function as that of the radiation shield cover 28.

The electron shield 30 is made of a metal having a melting point higher than that of the powder material 32 used as a raw material of the built object 38. The electron shield 30 is made of a material having low reactivity with the powder material 32. Examples of a component material of the electron shield 30 can include titanium. In addition, the electron shield 30 may be made of a metal which is the same material as the powder material 32 to be used. The electron shield 30 is electrically grounded to the GND. The electron shield 30 fulfills an electrical shielding function in a case where the powder material 32 is pre-sintered by irradiation with the electron beam 15 in a preheating step before a sintering step to be described below, thereby reducing occurrence of powder scattering to a small scale.

The camera 42 is a camera capable of imaging the built surface 32a of the powder layer. The camera 42 is disposed to be shifted in position in the Y direction from the beam irradiation device 2 so as not to interfere with a position of the beam irradiation device 2. The camera 42 is preferably a visible light camera such as a digital video camera. The camera 42 generates an image (image data) of the powder layer by imaging the built surface 32a of the powder layer. Therefore, the image generated by the camera 42 is an image indicating a state of the built surface 32a of the powder layer. Imaging performed by the camera 42 is performed in a state in which illumination light emitted from an illumination light source (not shown) included in the three-dimensional PBF-AM apparatus 1 reaches the built surface 32a of the powder layer.

The shutter 44 protects the camera 42 or an observation window so that an evaporated material generated from the built surface 32a when the powder material 32 is melted by the irradiation with the electron beam 15 does not adhere to the camera 42 or the observation window. The imaging of the built surface 32a by the camera 42 is performed in a state in which the shutter 44 is opened. In addition, when a step in which an evaporated substance is likely to be generated or a step in which a generation amount of the evaporated substance is large, that is, when the powder material 32 is melted by the electron beam 15, the step is performed in a state in which the shutter 44 is closed.

The plurality of detection units 46 that detect the backscattered electrons are arranged below the beam irradiation device 2.

Specifically, the detection units 46 are disposed between the beam irradiation device 2 and the built surface 32a of the built object 38 formed on the build plate 22. Note that positions at which the detection units 46 are provided are not limited to the example shown in FIG. 1, and the detection units 46 may be arranged at other various positions.

### 1-2. Control System of Three-Dimensional PBF-AM Apparatus

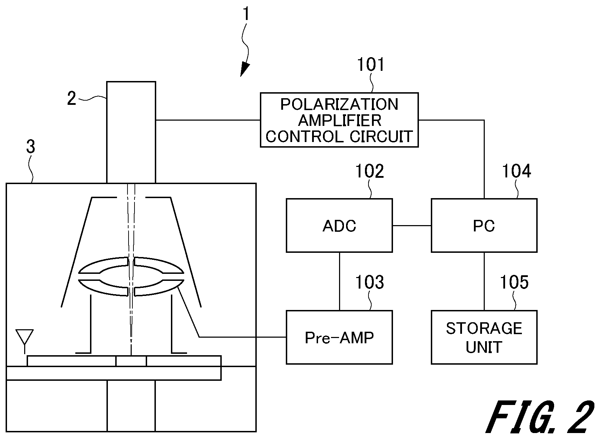

Next, a configuration of a control system of the three-dimensional PBF-AM apparatus 1 will be described with reference to FIG. 2.

FIG. 2 is a block diagram showing a configuration example of the control system of the three-dimensional PBF-AM apparatus 1 of the present example.

As shown in FIG. 2, the three-dimensional PBF-AM apparatus 1 includes a polarization amplifier control circuit 101 indicating an electron beam control unit, an analog-digital conversion circuit (ADC) 102, a preamplifier (pre-AMP) 103, a personal computer (PC) 104 indicating an example of a control unit, and a storage unit 105.

The polarization amplifier control circuit 101 is connected to the beam irradiation device 2 and the PC 104. The PC 104 transmits a control signal to the polarization amplifier control circuit 101 on the basis of beam scanning information stored in the storage unit 105. The polarization amplifier control circuit 101 controls the beam irradiation device 2 on the basis of the control signal. This allows the beam irradiation device 2 to irradiate a predetermined position with the electron beam 15. In addition, the polarization amplifier control circuit 101 transmits beam irradiation position information indicating the irradiation position of the electron beam 15 to the PC 104.

The Pre-AMP 103 is connected to the detection unit 46 and the ADC 102. Then, the Pre-AMP 103 converts a backscattered electron current detected by the detection unit 46 from a current signal to a voltage signal. The voltage signal converted by the Pre-AMP 103 is transmitted to the ADC 102. The ADC 102 converts the backscattered electron signal which becomes the voltage signal from an analog signal to a digital signal and transmits the digital signal to the PC 104.

In addition, the PC 104 has an image processing unit (not shown). In addition, the image processing unit of the PC 104 receives an image generated by the camera 42 and performs predetermined image processing on the received image. Then, the PC 104 outputs the camera image subjected to the image processing by the image processing unit to a display unit (not shown).

The storage unit 105 stores build data of the built object 38 that is built by the three-dimensional PBF-AM apparatus 1. Then, the PC 104 produces beam scanning information based on the build data and stores the produced beam scanning information in the storage unit 105. Note that, although an example in which the beam scanning information is produced by the PC 104 has been described, the present invention is not limited thereto, and a user may produce the beam scanning information based on the build data and store the beam scanning information in the storage unit 105.

In addition, the storage unit 105 stores a first operation example (an entire surface heating process) and a second operation example (a local heating process) as operation examples of preheating processes performed during the sintering step to be described below. Then, the PC 104 acquires a predetermined heating process (the operation example) from the first operation example or the second operation example stored in the storage unit 105 and performs the sintering step.

The storage unit 105 further stores a preheating start threshold t_{heating} or n_{heating}. In addition, the storage unit 105 stores an elapsed time t or the number n of irradiation points of the electron beam 15 during the sintering step. The PC 104 determines a timing of the preheating process that is performed during the sintering step on the basis of the preheating start threshold t_{heating} or n_{heating} and the elapsed time t or the number n of irradiation points stored in the storage unit 105.

### 2. Operation Example of Three-Dimensional PBF-AM Apparatus

### 2-1. Build Operation of Three-Dimensional PBF-AM Apparatus

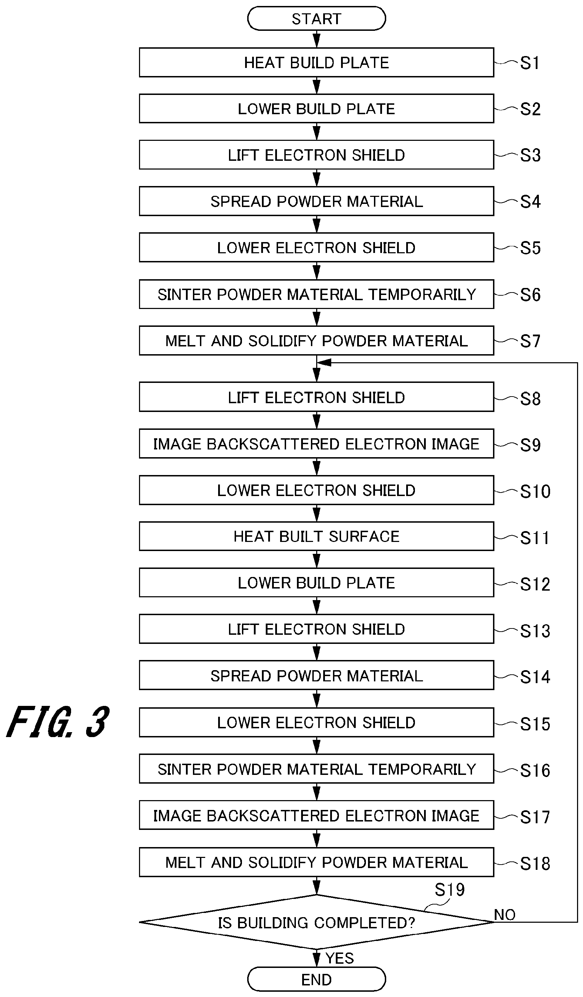

Next, an example of build operation of the three-dimensional PBF-AM apparatus 1 having the above-described configuration will be described with reference to FIG. 3.

FIG. 3 is a flowchart showing an example of the build operation of the three-dimensional PBF-AM apparatus 1.

As shown in FIG. 3, the polarization amplifier control circuit 101 controls the beam irradiation device 2 on the basis of a control signal from the PC 104. This allows the beam irradiation device 2 to be operated on the basis of a control command given from the polarization amplifier control circuit 101, thereby heating the build plate 22 (step S1). In step S1, the beam irradiation device 2 is operated under control of the polarization amplifier control circuit 101 to irradiate the build plate 22 with the electron beam 15 through the opening portion 30a of the electron shield 30. At this time, the polarization amplifier control circuit 101 defocuses the electron beam 15 by an objective lens or the like included in the beam irradiation device 2.

This defocus produces a state in which an in-focus position of the electron beam 15 is shifted downward from an upper surface of the build plate 22, that is, an under-focus state.

In addition, the polarization amplifier control circuit 101 controls the beam irradiation device 2 to perform scanning with the electron beam 15 in a wider range than the opening portion 30a of the electron shield 30. This allows the build plate 22 to be heated by irradiation with the electron beam 15. In addition, the build plate 22 is heated to a temperature at which the powder material 32 is pre-sintered. After the build plate 22 is heated to a predetermined temperature, the beam irradiation device 2 stops the irradiation with the electron beam 15. Note that scanning with the electron beam 15 in a wider range than the opening portion 30a of the electron shield 30 means scanning with the electron beam 15 in an area larger than an opening area of the opening portion 30a so that the opening portion 30a converges within the scanning range (a scanning region) of the electron beam 15. In addition, the scanning range (the scanning region) of the electron beam 15 in the beam irradiation device 2 may be narrower than the opening portion 30a of the electron shield 30.

Next, the build plate 22 is lowered by a predetermined length (step S2). In step S2, the plate moving device 26 lowers the inner base 24 by a predetermined length so that the upper surface of the build plate 22 is slightly lower than the upper surface of the powder material 32 spread on the build table 18. At this time, the build plate 22 is lowered by a predetermined length together with the inner base 24. The predetermined length (hereinafter, also written as "ΔZ") described here corresponds to a thickness of one layer when the built object 38 is built by layering layers one by one.

Next, the electron shield 30 is lifted (step S3). In step S3, for example, the recoater 16c is moved in the X direction, and a cam follower (not shown) is brought into contact with an inclined surface of a lifting/lowering member provided in the electron shield 30. This allows the electron shield 30 to be lifted along the Z direction.

Next, the powder material 32 is spread on the build plate 22 (step S4). In step S4, the powder supply device 16 drops, onto the build table 18 by the powder dropping unit 16b, the powder material 32 supplied from the hopper 16a to the powder dropping unit 16b. Thereafter, the powder supply device 16 moves the recoater 16c from one end side to the other end side in the X direction. This causes the powder material 32 to be spread on the inner base 24. At this time, the powder material 32 is spread with a thickness corresponding to ΔZ on the build table 18. In addition, the redundant powder material 32 is collected in the collection box 21.

Next, the electron shield 30 is lowered (step S5). In step S5, the recoater 16c is moved to a position at which the cam follower of the recoater 16c does not come into contact with the lifting/lowering member. This causes the electron shield 30 to be lowered to the upper surface of the build plate 22. At this time, the powder material 32 spread on the build plate 22 is exposed to the outside through the opening portion 30a of the electron shield 30. In addition, the powder material 32 around the build plate 22 enters a state of being covered by the shield portion 30b of the electron shield 30.

Next, the powder material 32 is pre-sintered (step S6). In step S6, the polarization amplifier control circuit 101 controls the beam irradiation device 2 on the basis of a control signal from the PC 104. This allows the powder material 32 on the build plate 22 to be irradiated with the electron beam 15 through the opening portion 30a of the electron shield 30. At this time, the polarization amplifier control circuit 101 defocuses the electron beam 15 by the objective lens or the like included in the beam irradiation device 2. This defocus produces a state in which the in-focus position of the electron beam 15 is shifted downward from the upper surface (the built surface 32a) of the powder material 32, that is, the under-focus state. In addition, the polarization amplifier control circuit 101 controls the beam irradiation device 2 to perform scanning with the electron beam 15 in the wider range than the opening portion 30a of the electron shield 30. This causes not only the powder material 32 exposed from the opening portion 30a but also the powder material 32 located outside the opening portion 30a (the powder material 32 shielded by the shield portion 30b) to be pre-sintered.

As described above, the step of covering the powder material 32 spread on the build plate 22 with the electron shield 30 having the opening portion 30a and irradiating the powder material 32 with the electron beam 15 through the opening portion 30a to pre-sinter the powder material 32 corresponds to a first step.

In the first step, the scanning with the electron beam 15 in the wider range than the opening portion 30a of the electron shield 30 enables at least the entire powder material 32 exposed from the opening portion 30a to be pre-sintered. In addition, when the powder material 32 is pre-sintered, the powder material 32 can have conductivity. Therefore, powder scattering in the sintering step which is performed after the preheating step can be reduced.

Next, the powder material 32 is melted and solidified (step S7). In step S7, the pre-sintered powder material 32 as described above is melted and solidified by the irradiation with the electron beam 15, thereby sintering the powder material 32 as a pre-sintered body. This step corresponds to a second step. In the second step, the beam irradiation device 2 selectively melts the powder material 32 on the build plate 22 by performing scanning with the electron beam 15 on the basis of the build data of the target built object 38, that is, two-dimensional data obtained by slicing three-dimensional computer-aided design (CAD) data by a constant thickness. The powder material 32 melted by the irradiation with the electron beam 15 is solidified after the electron beam passes. This causes the build of the first layer to be completed.

Next, the electron shield 30 is lifted (step S8). Next, the backscattered electron image is acquired (step S9). In step S9, first, the polarization amplifier control circuit 101 controls the beam irradiation device 2 on the basis of a control signal from the PC 104. This causes the beam irradiation device 2 to be operated on the basis of the control command given from the polarization amplifier control circuit 101, thereby scanning, with the electron beam 15, the built object 38 and a pre-sintered region 39 in which the pre-sintered powder material 32 exists. At this time, the beam irradiation device 2 reduces the electron beam current of the electron beam 15 as much as possible and irradiates the built surface 32a in focus. Then, the detection unit 46 detects the backscattered electrons generated by the electron beam 15.

In addition, the detection unit 46 outputs the detected backscattered electron signal to the PC 104 via the Pre-AMP 103. The image processing unit of the PC 104 performs arithmetic processing on the backscattered electron signal (the backscattered electron information) acquired from the detection unit 46 and acquires a backscattered electron image (a BSE image). In addition, the image processing unit stores the acquired BSE image in the storage unit 105.

Next, the electron shield 30 is lowered (step S10), and the built surface 32a is heated as a preparation for spreading the powder material 32 (step S11). In step S11, the polarization amplifier control circuit 101 controls the beam irradiation device 2 on the basis of the control signal from the PC 104. This allows the beam irradiation device 2 to be operated on the basis of the control command given from the polarization amplifier control circuit 101, thereby scanning the built surface 32a with the electron beam 15 through the opening portion 30a of the electron shield 30. At this time, the polarization amplifier control circuit 101 defocuses the electron beam 15 by the objective lens or the like included in the beam irradiation device 2. This defocus produces a state in which the in-focus position of the electron beam 15 is shifted downward from the built surface 32a, that is, the under-focus state.

In addition, the polarization amplifier control circuit 101 controls the beam irradiation device 2 to perform scanning with the electron beam 15 in the wider range than the opening portion 30a of the electron shield 30. This causes the entire region of the built surface 32a exposed from the opening portion 30a to be irradiated with the electron beam 15. In addition, the built surface 32a is heated to a temperature at which the powder material 32 is pre-sintered. After the built surface 32a is heated to a predetermined temperature, the beam irradiation device 2 stops the irradiation with the electron beam 15.

Next, the build plate 22 is lowered by a predetermined length (ΔZ) (step S12). In step S12, the plate moving device 26 lowers the inner base 24 by ΔZ so that the built surface 32a is slightly lower than the upper surface of the powder material 32 spread on the build table 18.

Next, the electron shield 30 is lifted (step S13), and the powder material 32 is spread over the build plate 22 (step S14). In step S14, the powder supply device 16 is operated similarly to step S4 described above.

Next, the electron shield 30 is lowered (step S15), and the powder material 32 is pre-sintered (step S16). This step corresponds to the first step. In step S16, the beam irradiation device 2 is operated similarly to step S6 described above.

When a pre-sintering step of the powder material 32 is completed in the process of step S16, a backscattered electron image is acquired (step S17). In the process of step S17, similarly to the process of step S9, the polarization amplifier control circuit 101 controls the beam irradiation device 2 and acquires the backscattered electron image (a BSE image) by the detection unit 46. In the process of step S17, a backscattered electron image of a pre-sintered body is acquired. Note that a process of lifting the electron shield 30 is performed before the process of step S17, and a process of lowering the electron shield 30 is performed after the process of step S17.

Next, the powder material 32 is melted and solidified (step S18). This step corresponds to the second step. In step S18, the beam irradiation device 2 is operated similarly to step S7 described above. This causes building of the second layer to be completed. Note that detailed operation of the sintering steps of steps S7 and S18 will be described below. The preheating process described in steps S6 and S16 described above is referred to as preheating, and the preheating process described in step S11 is referred to as after-heating. The preheating process performed in steps S7 and S18 to be described below is referred to as interval heating.

Thereafter, processes of steps S8 to S18 are repeatedly performed until the building of the built object 38 is completed in step S19. The building of the built object 38 is completed in a stage in which the powder material 32 is melted and solidified by the number of layers necessary for the building of the built object 38. This enables the target built object 38 to be obtained.

Note that, in the operation examples described above, operation of acquiring the BSE image is performed after the sintering step in step S7 and after the process in step S11, but a timing to perform operation of acquiring the BSE image is not limited thereto. For example, the operation of acquiring the BSE image may be performed after the pre-sintering step of step S6.

In addition, during the sintering steps in steps S7 and S18, that is, during the steps of melting the powder material 32 and building the built object 38, the preheating process of heating the powder material 32 is performed.

### 2-2. First Operation Example of Sintering Step

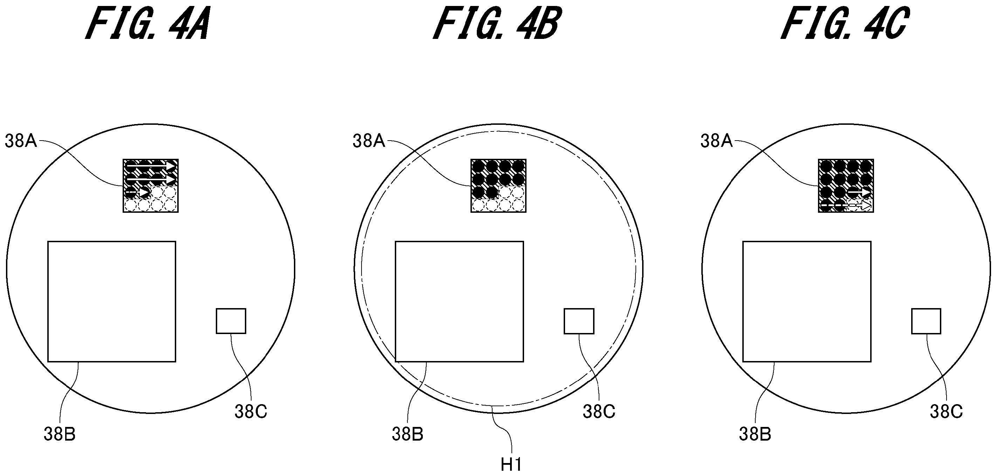

Next, a first operation example of the sintering step will be described with reference to FIGS. 4A to 23. FIGS. 4A to 4C are illustrative views showing the first operation example (the entire surface heating) of the preheating operation during the sintering step. Note that, in the following example, an example in which a plurality of built objects 38A, 38B, and 38C are built as the built objects (parts) 38 will be described.

Here, during the sintering steps in steps S7 and S18 in the operation example of FIG. 3 described above, that is, during the process of melting the powder material (hatch) 32, the preheating process of heating the powder material 32 is performed at a predetermined timing.

As shown in FIG. 4A, the polarization amplifier control circuit 101 controls the beam irradiation device 2 on the basis of a control signal from the PC 104 and irradiates the powder material 32 with the electron beam 15. This causes the powder material 32 to be melted by the irradiation with the electron beam 15. When a predetermined timing is reached during a building process, the PC 104 outputs the control signal to the polarization amplifier control circuit 101 to interrupt the melting process of the powder material 32 by the electron beam 15. Note that the predetermined timing is, for example, when the elapsed time t or the number n of irradiation points with the electron beam 15 of the sintering step reaches the preheating start threshold t_{heating} or n_{heating} set in advance.

Next, as shown in FIG. 4B, the polarization amplifier control circuit 101 controls the beam irradiation device 2 to preheat the powder material 32. At this time, the polarization amplifier control circuit 101 defocuses the electron beam 15 by the objective lens or the like included in the beam irradiation device 2. Here, the first operation example, that is, a first heating region H1 in the entire surface heating is the entire meltable area as shown in FIG. 4B. When the preheating process shown in FIG. 4B is completed, as shown in FIG. 4C, the polarization amplifier control circuit 101 controls the beam irradiation device 2 on the basis of the control signal from the PC 104 and irradiates the powder material 32 with the electron beam 15. The powder material 32 is remelted, and the sintering step is resumed.

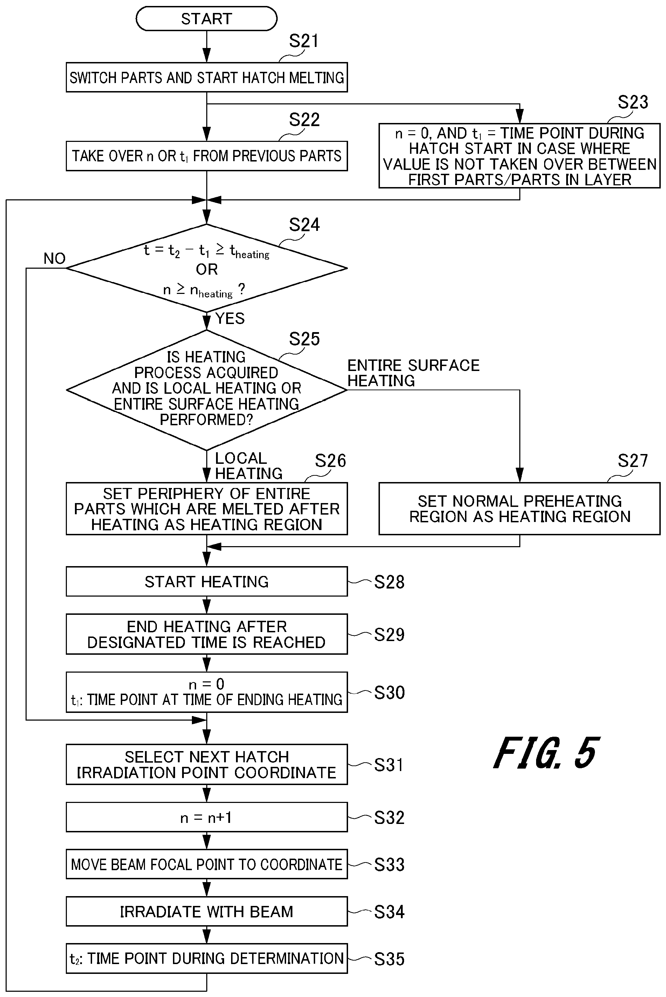

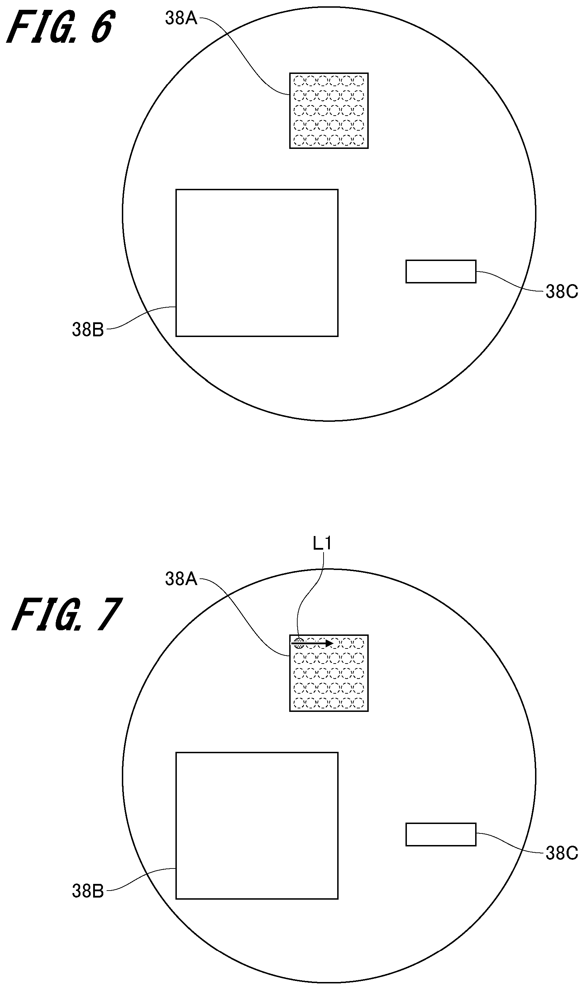

Next, the sintering step will be described with reference to FIGS. 5 to 23. FIG. 5 is a flowchart showing the sintering step. FIGS. 6 to 23 are illustrative views showing the first operation example of the sintering step.

First, as shown in FIG. 5, the polarization amplifier control circuit 101 controls the beam irradiation device 2 on the basis of the control signal from the PC 104 and switches between the built objects (parts) 38A, 38B, and 38C to be irradiated with the electron beam 15 so that melting of the powder material (hatch) 32 is started (step S21). Note that the number n of irradiation points of the electron beam 15 and the elapsed time t1 are taken over from the previous built objects 38A, 38B, and 38C (step S22). That is, the storage unit 105 stores the number n of irradiation points and the elapsed time t1 from the previous built objects 38A, 38B, and 38C. In the case of the built object 38A to be subjected to a first building process in the layer, or in a case in which a value is not taken over between the built objects 38A, 38B, and 38C, the number n of irradiation points is 0, and the elapsed time t1 is a melting start time point of each of the built objects 38A, 38B, and 38C (step S23).

As shown in FIGS. 6 to 11, this causes the polarization amplifier control circuit 101 to control the beam irradiation device 2 on the basis of the control signal from the PC 104 and irradiates the powder material 32 with the electron beam 15. In this example, an example in which the built object 38A is irradiated with the electron beam 15 is described. In addition, as shown in FIGS. 7 to 11, the polarization amplifier control circuit 101 scans an irradiation spot L1 on the first built object 38A with the electron beam 15. Here, the number n of irradiation points is the number of irradiation spots L1. In addition, one irradiation spot L1 is irradiated with the electron beam 15 for a predetermined irradiation time. As shown in FIGS. 7 to 11, the PC 104 counts the number n of irradiation points and the elapsed time t and stores the counted number and time in the storage unit 105.

Next, the PC 104 determines whether or not the number n of irradiation points stored in the storage unit 105 has reached the preheating start threshold n_{heating}. In addition, the PC 104 determines whether or not the elapsed time t stored in the storage unit 105, that is, a time obtained by subtracting a time point t1 at the end of heating from a time point t2 at the time of determination, has reached a preheating start threshold t_{heating} (step S24).

In a case where the PC 104 determines that the number n of irradiation points or the elapsed time t has not reached the preheating start threshold in the process of step S24 (NO in step S24), the process proceeds to step S31.

In a process of step S31, the polarization amplifier control circuit 101 selects a next irradiation point coordinate on the basis of the control signal from the PC 104. The PC 104 adds "1" to the number n of irradiation points and stores (n+1) in the storage unit 105 (step S32). The polarization amplifier control circuit 101 controls the beam irradiation device 2 to move the irradiation spot L1 of the electron beam 15 to irradiation point coordinates selected in step S31 (step S33). This causes the irradiation spot L1 of the electron beam 15 to be moved as shown in FIGS. 7 to 11.

Next, the beam irradiation device 2 irradiates the powder material 32 with the electron beam 15 (step S34). As a result, the powder material 32 at the irradiation spot L1 is melted. When the irradiation step of the electron beam 15 in step S34 is ended, the PC 104 stores, as a time point t2 at the time of determination, a time point, at which the irradiation with the electron beam 15 is completed, in the storage unit 105 (step S35). When the process of step S35 is completed, the process returns to the determination process of step S24.

In a case where the PC 104 determines that the number n of irradiation points or the elapsed time t has reached the preheating start threshold in a process of step S24 (YES in step S24), the process proceeds to step S25. In a process of step S25, the PC 104 acquires a preset heating process from the storage unit 105. The PC 104 determines whether the acquired heating process is local heating or entire heating. Note that, in the following description, an example in which the heating process is the first operation example (the entire surface heating) will be described.

In a case where the PC 104 determines that the acquired heating process is the entire surface heating in the process of step S25, the PC 104 sets a normal preheating region as the first heating region H1 and outputs a control signal to the polarization amplifier control circuit 101 (step S27). Next, the polarization amplifier control circuit 101 controls the beam irradiation device 2 on the basis of the control signal from the PC 104 to start preheating (step S28).

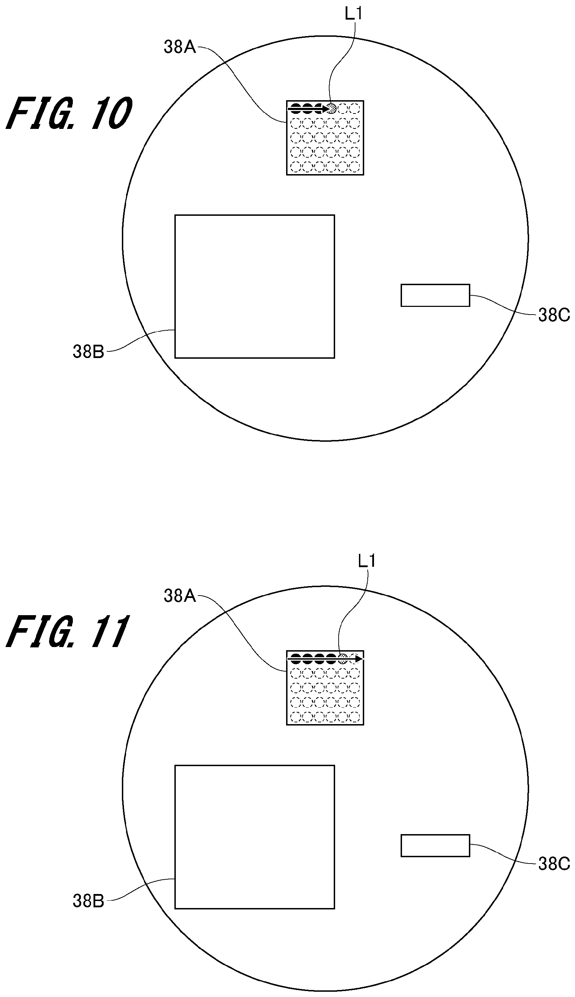

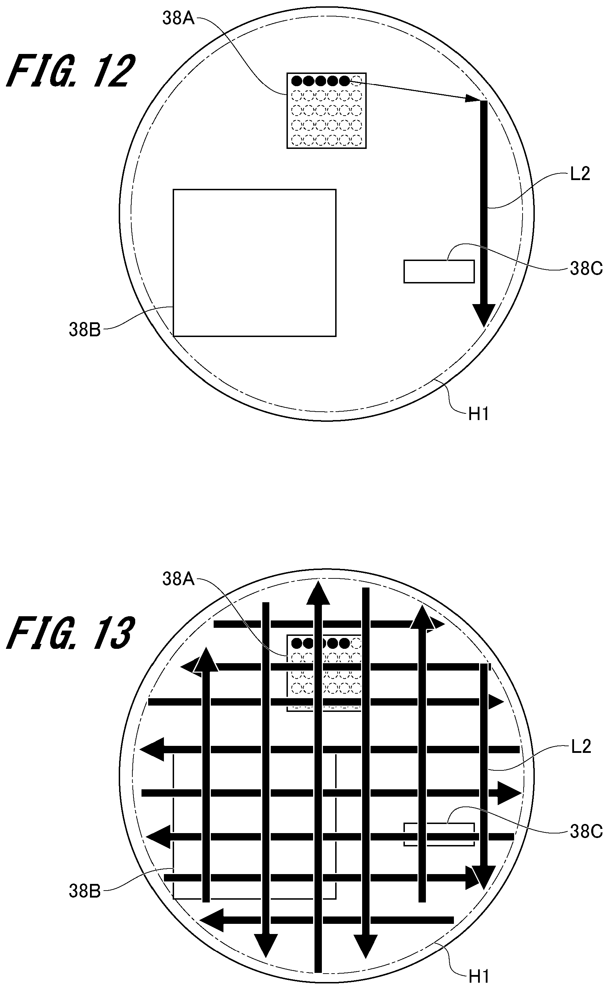

That is, as shown in FIG. 11, in a case where the number n of irradiation points or the elapsed time t reaches the preheating start threshold, the polarization amplifier control circuit 101 interrupts the melting process of the powder material 32 after the irradiation of the beam irradiation device 2. Then, as shown in FIGS. 12 and 13, the polarization amplifier control circuit 101 controls the beam irradiation device 2 to scan an irradiation position L2 of the electron beam 15 within a range of the first heating region H1 set in the processing of step S27. This causes the powder material 32 to be preheated again. When a designated time is reached, the polarization amplifier control circuit 101 controls the beam irradiation device 2 to end the preheating (step S29).

When a process of step S29 is ended, the PC 104 sets a value of the number n of irradiation points stored in the storage unit 105 to "0". Alternatively, the PC 104 stores, in the storage unit 105, a time point at which the preheating is ended as the elapsed time t1 (step S30). That is, the PC 104 resets the number n of irradiation points and the elapsed time t.

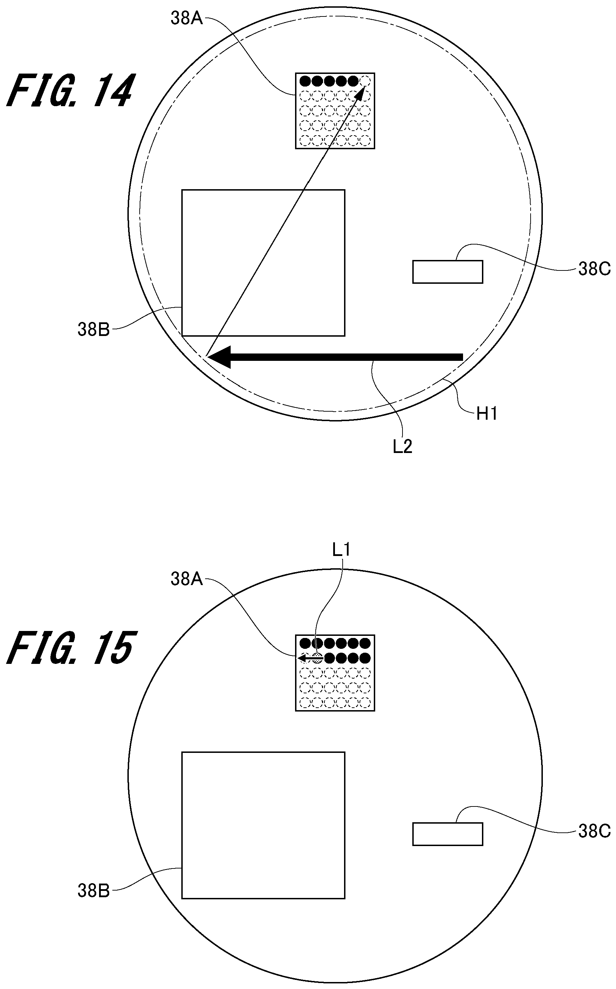

When a process of step S30 is ended, processes in steps S31 and S32, that is, the melting processes of the powder material 32, are resumed. In step S31, as shown in FIG. 14, the polarization amplifier control circuit 101 selects the irradiation position L2 of the electron beam 15 as a coordinate of the next irradiation point from the irradiation spot L1 at which the melting process shown in FIG. 11 is interrupted. As shown in FIGS. 15 to 19, the polarization amplifier control circuit 101 controls the beam irradiation device 2 to melt the powder material 32 until the number n of irradiation points or the elapsed time t reaches the preheating start threshold again.

As described above, according to the three-dimensional PBF-AM apparatus 1 of the present example, the melting process is interrupted, and the preheating process is performed when the predetermined timing is reached during the melting process of the powder material 32 constituting one built object 38A. Regarding a built object having a relatively large built surface, this enables variations between the temperature of the powder material 32 to be melted first and the temperature of the powder material 32 to be melted last to be reduced. As a result, the variations in the temperature during the melting of the powder material 32 can be reduced, so that the quality of the completed built object can be improved.

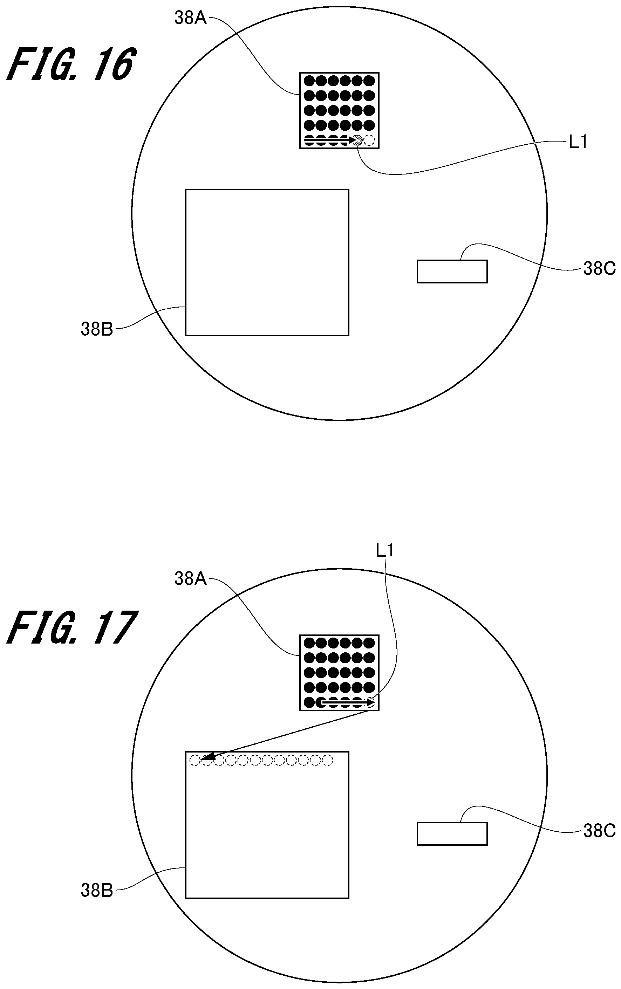

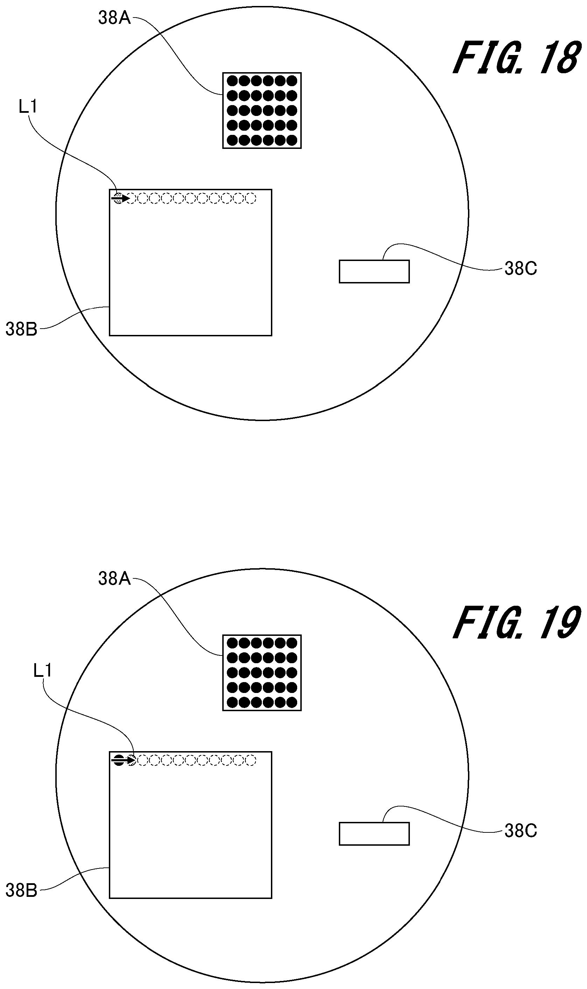

In addition, as shown in FIGS. 17 and 18, in a case where the melting process of the powder material 32 of the first built object 38A is completed before the number n of irradiation points or the elapsed time t reaches the preheating start threshold, the PC 104 switches the process to the melting process of the powder material 32 of the second built object 38B. Here, as described in step S22 described above, the number n of irradiation points of the electron beam 15 or the elapsed time t1 is taken over from the first built object 38A.

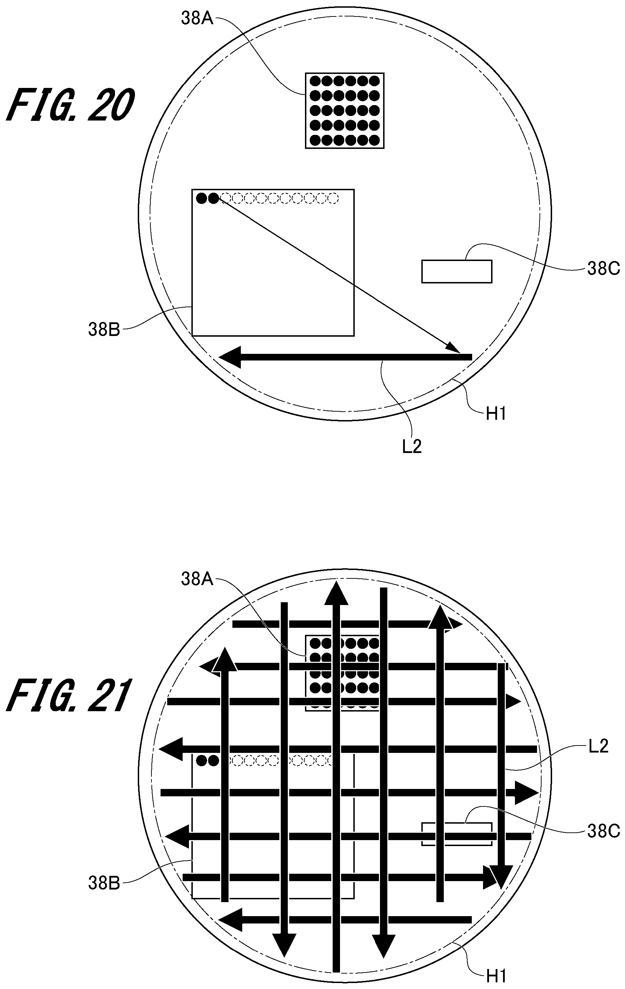

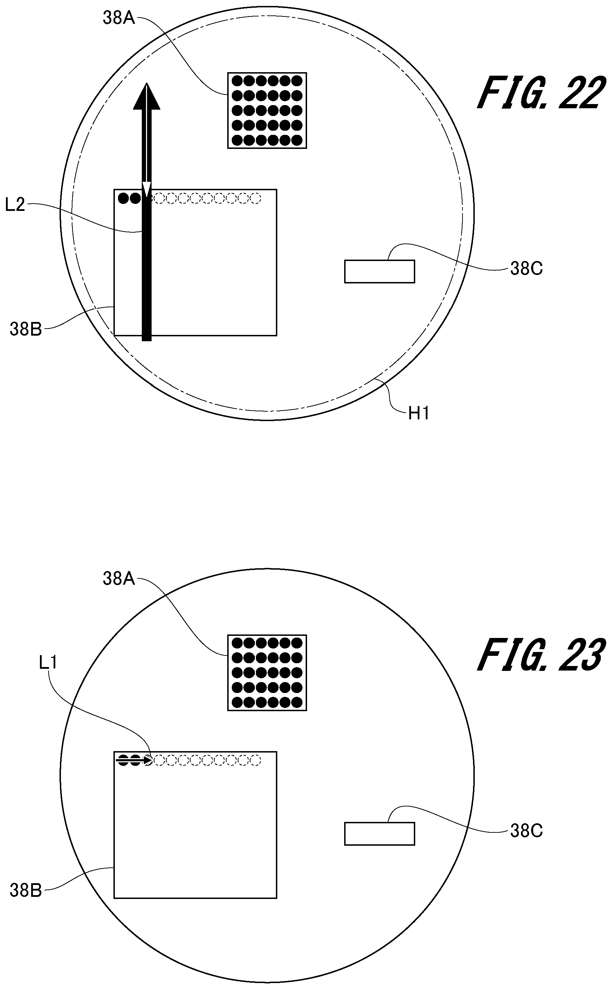

As shown in FIG. 19, when the number n of irradiation points or the elapsed time t reaches the preheating start threshold during the melting process of the powder material 32 of the second built object 38B, the PC 104 outputs a control signal to the polarization amplifier control circuit 101. This causes the polarization amplifier control circuit 101 to interrupt the melting process of the powder material 32 after the beam irradiation device 2 irradiates the irradiation spot L1 shown in FIG. 20. As shown in FIGS. 21 and 22, the polarization amplifier control circuit 101 controls the beam irradiation device 2, scans the irradiation position L2 of the electron beam 15 within the range of the first heating region H1 set in the process of step S27, and preheats the powder material 32.

In addition, when the preheating process is ended, as shown in FIG. 22, the polarization amplifier control circuit 101 selects the irradiation position L2 of the electron beam 15 as coordinates of the next irradiation point from the irradiation spot L1 in which the melting process shown in FIG. 20 is interrupted. Then, as shown in FIG. 23, the polarization amplifier control circuit 101 controls the beam irradiation device 2 to irradiate the predetermined irradiation spot L1 with the electron beam 15.

As described above, a timing to perform preheating during the melting process is the same timing for the plurality of built objects 38A, 38B, and 38C having different sizes. Therefore, a temperature difference during the melting of the powder material 32 between the small built objects 38A and 38C and the large built object 38B can be reduced. As a result, similar quality can be obtained for all of the plurality of built objects 38A, 38B, 38C having different sizes.

Hereinafter, the above-described process is performed until the powder material 32 of all the built objects 38A, 38B, and 38C is melted. In the above-described example, an example has been described, in which the number n of irradiation points of the electron beam 15 or the elapsed time t1 is taken over when the irradiation spot L1 is switched from the first built object 38A to the second built object 38B, but the present invention is not limited thereto. For example, when the irradiation spot L1 is switched from the first built object 38A to the second built object 38B, as described in step S23 described above, the number n of irradiation points may be set to 0, and the elapsed time t1 may be set as a melting start time point of the second built object 38B.

### 2-3. Second Operation Example of Sintering Step

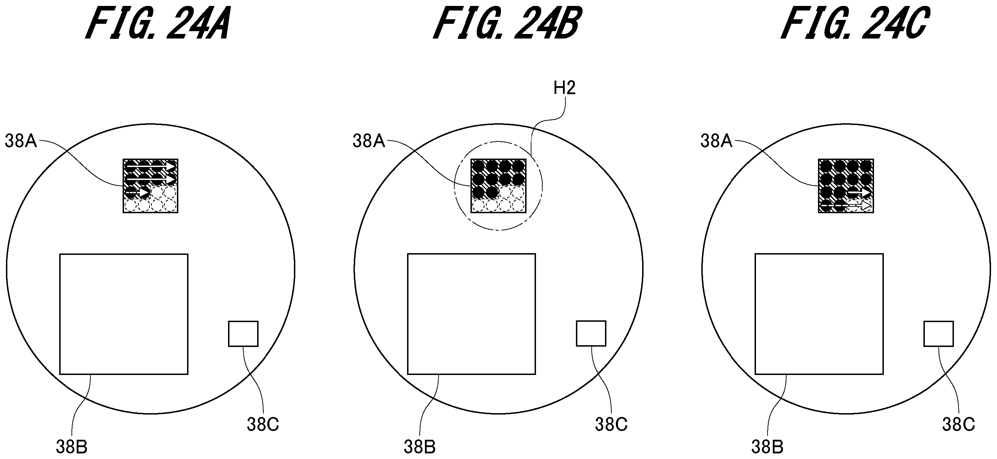

Next, a second operation example of the sintering step will be described with reference to FIGS. 24A to 34. FIGS. 24A to 24C are illustrative views showing the second operation example (the local heating) of the preheating operation during the sintering step.

As shown in FIG. 24A, the polarization amplifier control circuit 101 controls the beam irradiation device 2 on the basis of the control signal from the PC 104 to irradiate the powder material 32 with the electron beam 15. This causes the powder material 32 to be melted by the irradiation with the electron beam 15. When a predetermined timing is reached during the building process, the PC 104 outputs the control signal to the polarization amplifier control circuit 101 to interrupt the melting process of the powder material 32 by the electron beam 15. Note that the predetermined timing is, for example, when the elapsed time t or the number n of irradiation points of the electron beam 15 of the sintering step reaches the preheating start threshold t_{heating} or n_{heating} set in advance.

Next, as shown in FIG. 24B, the polarization amplifier control circuit 101 controls the beam irradiation device 2 to preheat the powder material 32. At this time, the polarization amplifier control circuit 101 defocuses the electron beam 15 by the objective lens or the like included in the beam irradiation device 2. Here, the second operation example, that is, a second heating region H2 in the local heating, is set only at the first built object 38A and the periphery around the first built object 38A being melted, as shown in FIG. 24B. When the preheating process shown in FIG. 24B is completed, as shown in FIG. 24C, the polarization amplifier control circuit 101 controls the beam irradiation device 2 on the basis of the control signal from the PC 104 and irradiates the powder material 32 with the electron beam 15. The powder material 32 is remelted, and the sintering step is resumed.

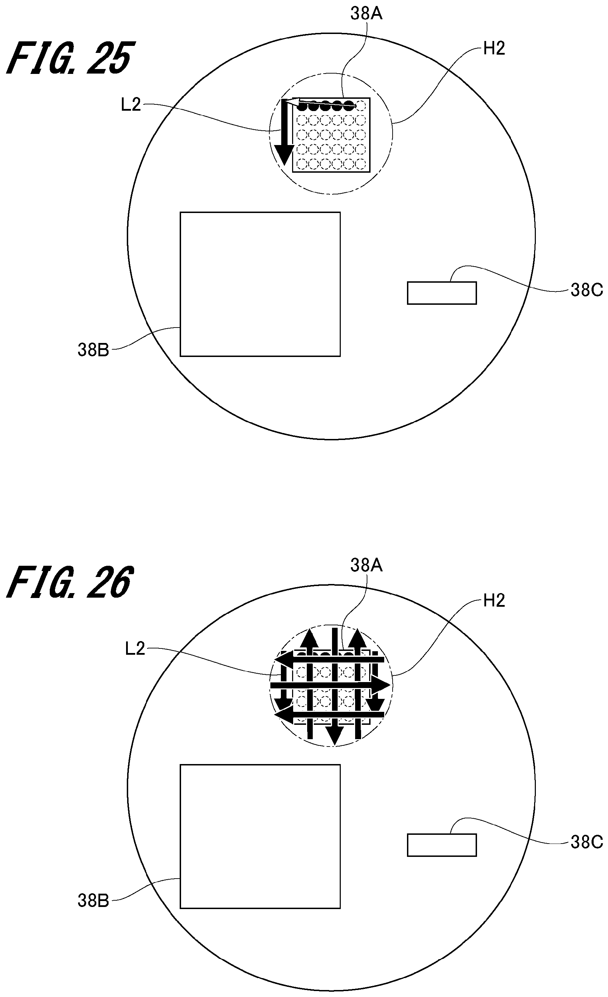

In addition, in a case where the PC 104 determines that the acquired heating process is local heating in the process of step S25 described in FIG. 5, the PC 104 sets all the built objects 38A, 38B, and 38C that are melted in the next set after heating and the periphery therearound as the second heating region H2 of the preheating region, and outputs a control signal to the polarization amplifier control circuit 101 (step S26). As shown in FIG. 25, this causes the polarization amplifier control circuit 101 to interrupt the melting process of the powder material 32 after the irradiation of the beam irradiation device 2 in a case where the number n of irradiation points or the elapsed time t reaches the preheating start threshold. As shown in FIG. 26, the polarization amplifier control circuit 101 controls the beam irradiation device 2 to scan the irradiation position L2 of the electron beam 15 within a range of the second heating region H2 set in the processing of step S26. This causes the powder material 32 to be preheated again.

When a designated time is reached, the polarization amplifier control circuit 101 controls the beam irradiation device 2 to end the preheating (step S29).

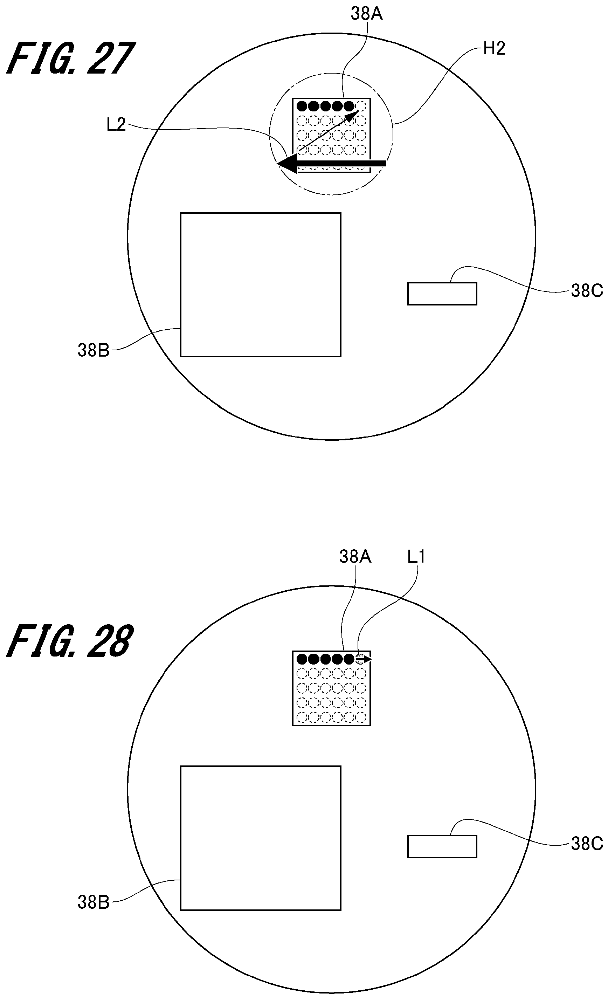

When a process of step S29 is ended, the PC 104 sets a value of the number n of irradiation points stored in the storage unit 105 to "0". Alternatively, the PC 104 stores, in the storage unit 105, a time point at which the preheating is ended as the elapsed time t1 (step S30). When a process of step S30 is ended, processes in steps S31 and S32, that is, the melting processes of the powder material 32, are resumed. In step S31, as shown in FIG. 27, the polarization amplifier control circuit 101 selects the irradiation position L2 of the electron beam 15 as a coordinate of the next irradiation point from the irradiation spot L1 at which the melting process shown in FIG. 25 is interrupted. As shown in FIG. 28, the polarization amplifier control circuit 101 controls the beam irradiation device 2 to perform the melting process of the powder material 32 until the number n of irradiation points or the elapsed time t reaches the preheating start threshold again.

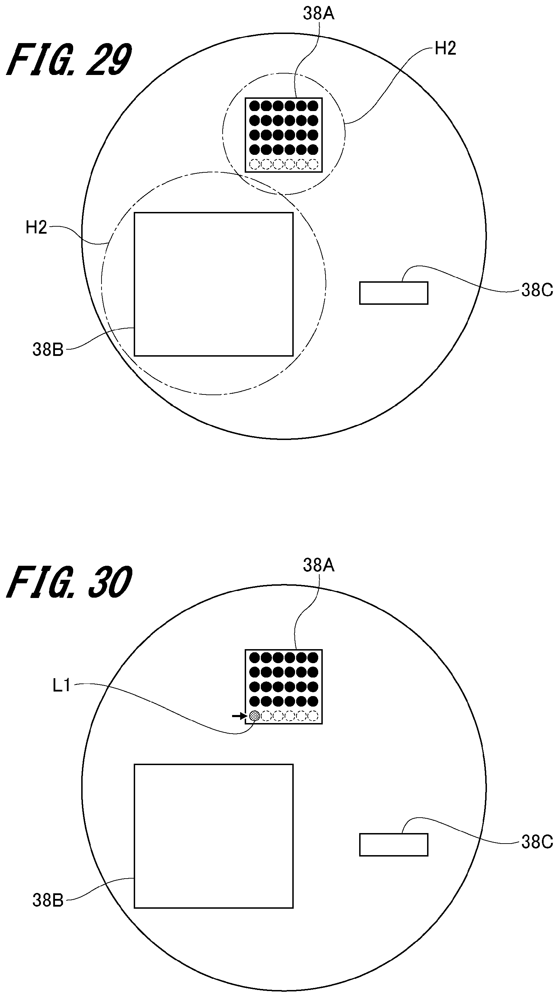

Next, in a case where the irradiation spot L1 moves from the first built object 38A to the second built object 38B before the number n of irradiation points or the elapsed time t reaches the preheating start threshold, the PC 104 sets the irradiation spot L1 within the range of the second heating region H2 of the preheating region as shown in FIG. 29. That is, not only the first built object 38A currently subjected to the melting process of the powder material 32 but also the second built object 38B to be subjected to the melting process next is set in the second heating region H2.

In addition, as shown in FIGS. 30 to 32, in a case where the melting process of the powder material 32 of the first built object 38A is completed, the PC 104 switches the process to the melting process of the powder material 32 of the second built object 38B. Here, as described in step S22 described above, the number n of irradiation points of the electron beam 15 or the elapsed time t1 is taken over from the first built object 38A.

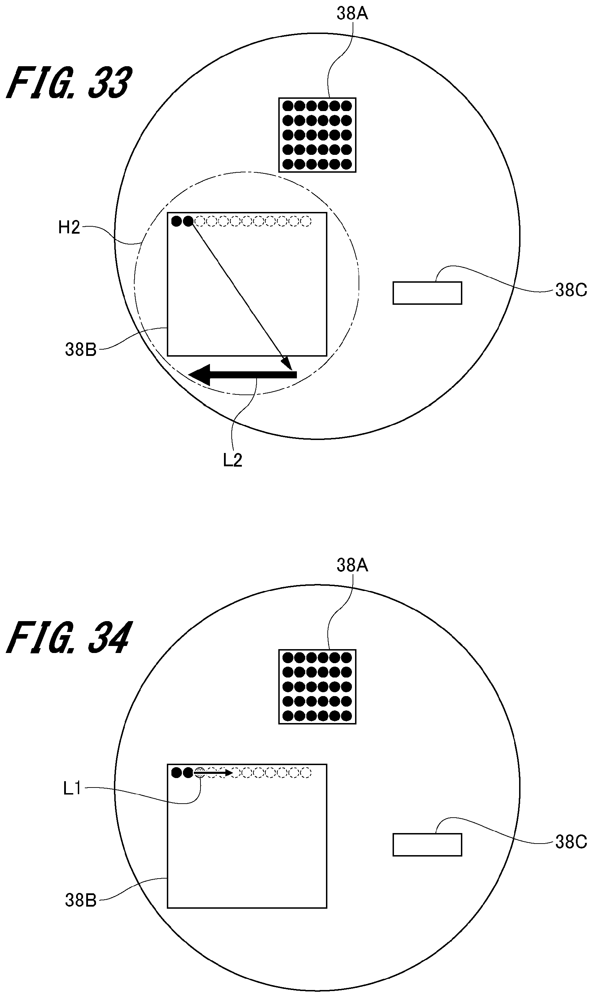

In addition, when the melting process of the powder material 32 of the first built object 38A is completed, and the number n of irradiation points or the elapsed time t reaches the preheating start threshold during the melting process of the powder material 32 of the second built object 38B, the range of the second heating region H2 of the preheating region set by the PC 104 is only set in the second built object 38B as shown in FIG. 33.

When the process of step S29 is ended, the PC 104 sets a value of the number n of irradiation points stored in the storage unit 105 to "0". Alternatively, the PC 104 stores, in the storage unit 105, a time point at which the preheating is ended as the elapsed time t1 (step S30). When a process of step S30 is ended, processes in steps S31 and S32, that is, the melting processes of the powder material 32, are resumed. In step S31, as shown in FIG. 34, the polarization amplifier control circuit 101 selects the irradiation position L2 of the electron beam 15 as a coordinate of the next irradiation point from the irradiation spot L1 at which the melting process shown in FIG. 33 is interrupted. As shown in FIG. 34, the polarization amplifier control circuit 101 controls the beam irradiation device 2 to perform the melting process of the powder material 32 until the number n of irradiation points or the elapsed time t reaches the preheating start threshold again.

Hereinafter, the above-described processes are performed until the powder material 32 of all the built objects 38A, 38B, and 38C is melted.

Similarly to the first operation example, in this second operation example, variations between the temperature of the powder material 32 to be melted first and the temperature of the powder material 32 to be melted last in one built object can be reduced. Further, a temperature difference during the melting of the powder material 32 between the small built objects 38A and 38C and the large built object 38B can be reduced.

According to the second operation example, the second heating region H2 can be made smaller than the first heating region H1 which is the preheating region in the first operation example. This enables the time taken for the preheating process performed during the melting process to be shortened as compared with the first operation example. As a result, it is possible to shorten a throughput for the building process in the three-dimensional PBF-AM apparatus 1 as compared with the first operation example.

When the built objects 38A, 38B, and 38C are built, the above-described first operation example and second operation example may be combined. That is, the first operation example may be performed in a certain layer among the plurality of layers, and the second operation example may be performed in another layer among the plurality of layers.

Note that the present invention is not limited to the embodiments described above and shown in the drawings, and various modifications can be made within a range without departing from the gist of the invention described in What is claimed is.

In addition, the first irradiation range H1 and the second irradiation range H2 of the electron beam 15 at the time of performing the preheating may be set by the PC 104 that is the control unit, or may be set by a user and the set irradiation range may be input to the PC 104 and the storage unit 105 via an input unit connected to the PC 104 and the storage unit 105. Further, the preheating start threshold t_{heating} or n_{heating} stored in advance in the storage unit 105 may be set by the PC 104 on the basis of the build data. Alternatively, the irradiation range set by the user may be input to the PC 104 or the storage unit 105 via an input unit connected to the PC 104 and the storage unit 105.

For example, in the embodiment described above, an example has been described, in which a metal powder of titanium, aluminum, iron, or the like is applied as the powder material, but the powder material is not limited thereto, and a resin or the like may be used as the powder material. In addition, the example has been described, in which the beam irradiation device that performs irradiation with the electron beam is applied as the irradiation device, but the irradiation device is not limited thereto. As the irradiation device, for example, a laser irradiation device that performs irradiation with a laser as a primary beam may be applied.

In addition, some or all of the above-described components, functions, processing units, and the like may be realized by hardware, for example, by designing an integrated circuit or the like. In addition, the components, the functions, and the like described above may be realized by software by a processor interpreting and executing a program for realizing the individual functions. Information such as a program, a table, and a file for realizing each function can be stored in a recording device such as a memory, a hard disk, or a solid state drive (SSD), or a recording medium such as an IC card, an SD card, or a DVD.

In the present specification, words such as "parallel" and "orthogonal" are used, but these do not strictly mean only "parallel" and "orthogonal", and may mean a state of "substantially parallel" or "substantially orthogonal" including "parallel" and "orthogonal" in a range in which the function can be exhibited.

### Reference Signs List

- 1: Three-dimensional PBF-AM apparatus
- 2: Beam irradiation device
- 3: Vacuum chamber
- 15: Electron beam
- 16: Powder supply device
- 16a: Hopper
- 16b: Powder dropping unit
- 16c: Recoater
- 16d: Blade
- 18: Build table
- 20: Build box
- 21: Collection box
- 22: Build plate
- 24: Inner base
- 26: Plate moving device
- 32: Powder material
- 38,: 38A, 38B, 38C Built object
- 38C: Support portion
- 42: Camera
- 44: Shutter
- 46: Detection unit
- 101: Polarization amplifier control circuit
- 102: Digital conversion circuit (ADC)
- 103: Preamplifier (Pre-AMP)
- 104: Personal computer (PC, CONTROL UNIT)
- 105: Storage unit
- H1: First heating region
- H2: Second heating region
- L1: Irradiation spot
- L2: Irradiation position

## Claims

1. A three-dimensional powder bed fusion additive manufacturing apparatus (1) that builds built objects (38), the apparatus comprising:
a build plate (22);
a powder supply device (16) that supplies a powder material (32) to the build plate (22) and forms a powder layer;
an irradiation device that irradiates the powder layer with a primary beam; and
a control unit that controls the irradiation device, wherein
as a predetermined timing is reached when the powder material (32) is melted, the control unit controls the irradiation device to interrupt a melting process of the powder material (32) and perform a preheating process in which the powder material (32) is preheated.

2. The three-dimensional powder bed fusion additive manufacturing apparatus (1) according to claim 1, comprising a storage unit (105) that stores a preheating start threshold (t_{heating} or n_{heating}) which is a timing to start preheating and the number (n) of irradiation points of the primary beam or an elapsed time (t) during the melting process of the powder material (32), wherein
the control unit performs the preheating process when the number (n) of irradiation points of the primary beam or the elapsed time (t) reaches the preheating start threshold (t_{heating} or n_{heating}) during the melting process of the powder material (32).

3. The three-dimensional powder bed fusion additive manufacturing apparatus (1) according to claim 2, wherein the control unit resets the number (n) of irradiation points of the primary beam or the elapsed time (t) when performing the preheating process.

4. The three-dimensional powder bed fusion additive manufacturing apparatus (1) according to claim 3, wherein, in a case where a first built object (38A) and a second built object (38B) are built, the control unit switches to a melting process of the powder material (32) of the second built object (38B) in a case of completing a melting process of the powder material (32) of the first built object (38A), and takes over the number (n) of irradiation points of the primary beam or the elapsed time (t) from the first built object (38A).

5. The three-dimensional powder bed fusion additive manufacturing apparatus (1) according to claim 1, wherein, when performing the preheating process, the control unit sets a heating region (H1, H2) which is irradiated with the primary beam to an entire meltable area.

6. The three-dimensional powder bed fusion additive manufacturing apparatus (1) according to claim 1, wherein, in a case where a plurality of the built objects (38) are built, the control unit sets a heating region (H1, H2) which is irradiated with the primary beam to a built surface (32a) of at least a built object (38) being subjected to a melting process among the plurality of built objects (38) when performing the preheating process.

7. The three-dimensional powder bed fusion additive manufacturing apparatus (1) according to claim 6, wherein, when performing the preheating process, the control unit sets a heating region (H1, H2) which is irradiated with the primary beam to a built surface (32a) of a built object (38) that is melted after the preheating process, in addition to the built surface (32a) of the built object (38) being subjected to the melting process among the plurality of built objects (38).

8. A control method of a three-dimensional powder bed fusion additive manufacturing apparatus (1), comprising:
a process of supplying a powder material (32); and
a process of irradiating the powder material (32) with a primary beam and melting the powder material (32), wherein
as a predetermined timing is reached when the powder material (32) is melted, a melting process of the powder material (32) is interrupted, and a preheating process in which the powder material (32) is preheated is performed.
